# NOUVEAU FASCICULE DE BREVET EUROPEEN

(11) **EP 1 510 381 B2**
(45) Date de publication et mention de la décision concernant l'opposition: **20.11.2013**
(45) Mention de la délivrance du brevet: 24.01.2007
(21) Numéro de dépôt: 04016070.7
(22) Date de dépôt: 08.07.2004
(51) Int. Cl.: B60H 1/22, F24H 9/20, H05B 1/02

(54) **Elément de chauffage électrique pour appareil de ventilation, de chauffage et/ou de climatisation d'habitacle**
Elektrisches Heizelement für Lüftungs-, Heizungs- und/oder Klimaanlagen
Electrical heating element for ventilating, heating and/or air conditioning unit

(30) Priorité: 29.08.2003 FR 0310327
(43) Date de publication de la demande: 02.03.2005
(73) Titulaire: VALEO SYSTEMES THERMIQUES, 78320 Le Mesnil Saint-Denis (FR)
(72) Inventeur: Terranova, Gilbert, 78610 Le Perray en Yvelines (FR)
(74) Mandataire: Rolland, Jean-Christophe

(56) Documents cités:
- EP-A- 0 901 311
- EP-A- 1 157 869
- EP-A1- 0 840 534
- EP-A2- 1 338 451
- DE-A- 19 925 757
- FR-A- 2 826 912
- FR-A- 2 827 113

## Description

L'invention se rapporte à un élément de chauffage électrique pour appareil de ventilation, de chauffage et/ou de climatisation d'habitacle, notamment de véhicule automobile.

Actuellement, dans les appareils de ventilation, de chauffage et/ou de climatisation pour habitacle de véhicule automobile, il est courant d'utiliser, en complément du radiateur de chauffage, un élément de chauffage à faisceau de résistances piloté par une carte électronique disposée dans un boîtier de commande. Dans le cas d'une résistance électrique à coefficient de température positif (en abrégé : CTP) qui s'autorégule, le pilotage est du type électronique de puissance. Des éléments de chauffage à faisceau de résistances piloté par une carte électronique disposée dans un boîtier de commande sont notamment décrits dans EP-A-0 901 311.

Le problème majeur rencontré pour implanter le faisceau avec son boîtier électronique est l'encombrement du boîtier renfermant l'électronique de commande dans l'espace alloué. Ce type de faisceau de résistances utilise en effet une puissance électrique élevée qui requiert l'utilisation d'un circuit imprimé volumineux à cause de la partie électronique, des composants et du support.

L'insertion de ce volume dans les espaces restreints alloués dans les véhicules automobiles est préjudiciable au bon dimensionnement de l'appareil de ventilation, de chauffage et/ou de climatisation pour garantir ses performances aérauliques et aérothermiques. De plus, il limite la possibilité de disposer les canalisations ou les bouches d'aération directement sur l'appareil de ventilation, de chauffage et/ou de climatisation, et peut ainsi conduire à une dissymétrie des conduits d'air internes ou des autres composants implantés dans l'appareil.

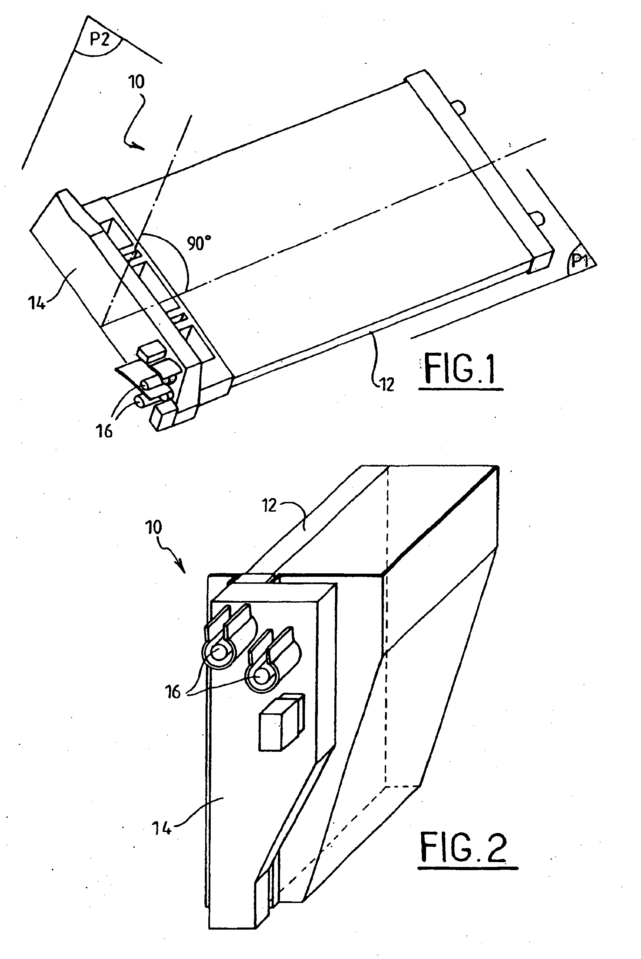

Cette augmentation de l'encombrement provient plus explicitement du fait que dans ce type de montage, le boîtier s'étend perpendiculairement au plan du faisceau de résistances, comme illustré sur les figures 1 et 2, afin de positionner les cosses d'alimentation dans le prolongement dudit faisceau.

Pour résoudre ces problèmes, l'invention propose une nouvelle implantation de la partie électronique et par conséquent du boîtier la renfermant.

Plus précisément, l'invention a pour objet un élément de chauffage électrique pour appareil de ventilation, de chauffage et /ou de climatisation d'habitacle, notamment de véhicule automobile, selon la revendication 1.

Le parallélisme des plans du faisceau de résistances et de la carte électronique (correspondant au plan moyen du boîtier) s'entend au sens large, c'est-à-dire que les plans peuvent être considérés comme distincts ou confondus. Par ailleurs, le terme « sensiblement » signifie que les plans forment un angle de 0 à quelques degrés, par exemple 3 à 5 degrés, sans dépasser environ 10 degrés.

L'invention se rapporte également à un appareil de ventilation, de chauffage et/ou de climatisation pour habitacle de véhicule automobile muni d'une telle résistance.

D'autres caractéristiques, détails et avantages de l'invention ressortiront à la lecture de la description qui suit, faite en référence aux dessins annexés donnés à titre d'exemple et qui représentent respectivement :
- les figures 1 et 2, des vues schématiques en perspective d'un élément de chauffage de l'art antérieur,
- la figure 3, une vue schématique en perspective d'un élément de chauffage,
- la figure 4, une vue schématique en perspective d'un élément de chauffage monté dans un appareil de ventilation, de chauffage et/ou de climatisation, et
- la figure 5, une vue schématique en perspective d'un élément de chauffage conforme à la présente invention.

Les figures 1 et 2 illustrent l'art antérieur dans lequel un élément de chauffage 10 est représenté. Cet élément de chauffage 10 comprend un faisceau électrique 12 qui permet de chauffer par passage de courant à travers lui, un boîtier 14 renfermant l'électronique de commande et de puissance et des cosses 16 de connexion électrique du boîtier. Le boîtier 14 est disposé dans un plan P2 perpendiculairement au plan P1 du faisceau 12. Compte tenu des composants qu'il renferme, le boîtier 14 est assez volumineux et dépasse donc nettement de l'épaisseur du faisceau 12 duquel il fait saillie. Les cosses 16 sont quant à elles montées perpendiculairement au boîtier 14, sensiblement dans le prolongement du faisceau 12.

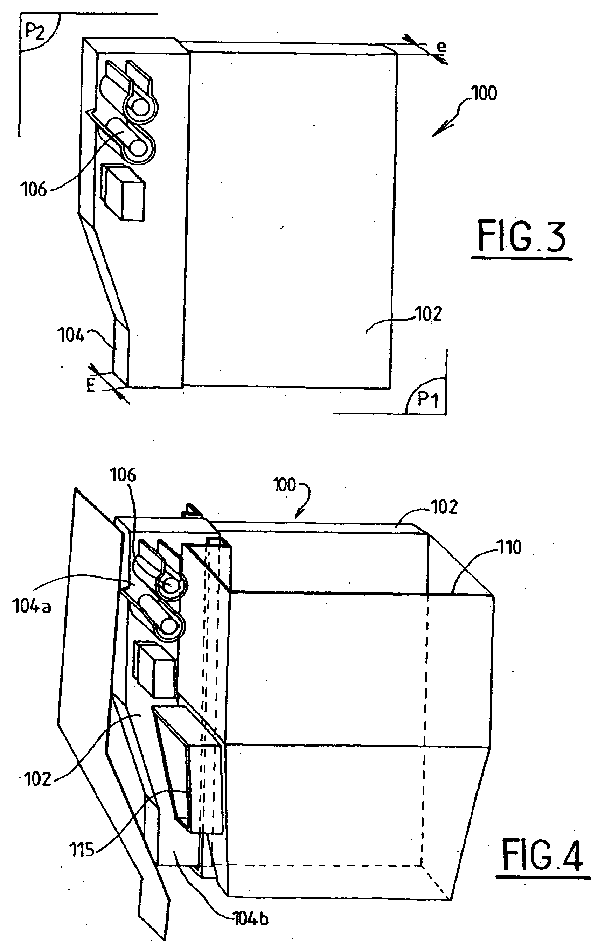

Sur la figure 3, un exemple d'élément de chauffage est représenté en perspective. Cet élément 100 comprend un faisceau électrique à coefficient de température positif 102 relativement plat et allongé qui permet de chauffer par passage de courant à travers lui et un boîtier 104 renfermant une carte électronique de puissance (comportant un support de composants et de circuits intégrés) muni de cosses de connexion électrique 106.

Le boîtier électronique de puissance et de commande 104 est disposé dans le prolongement du faisceau 102 et présente une épaisseur E égale ou légèrement supérieure, voire sensiblement supérieure, à l'épaisseur e du faisceau 102. Dans l'exemple illustré, l'épaisseur E du boîtier est d'environ 20 mm alors que l'épaisseur e du faisceau est d'environ 15 mm. L'épaisseur E peut être supérieure à l'épaisseur e jusqu'à 20 à 30 %.

Les cosses 106 font saillie perpendiculairement au boîtier électronique de puissance et de commande 104 et donc au faisceau 102. Elles sont par exemple disposées à une extrémité 102a du boîtier 104 de façon à permettre à une partie au moins d'un appareil de ventilation, de chauffage et/ou de climatisation 110 d'occuper la place libérée par la position perpendiculaire du boîtier, comme représenté sur la figure 4. Ainsi, des conduites ou des bouches d'aération 115 peuvent être disposées sur l'appareil de ventilation, de chauffage et/ou de climatisation, par exemple au niveau de l'extrémité 104b du boîtier électronique de puissance et de commande 104.

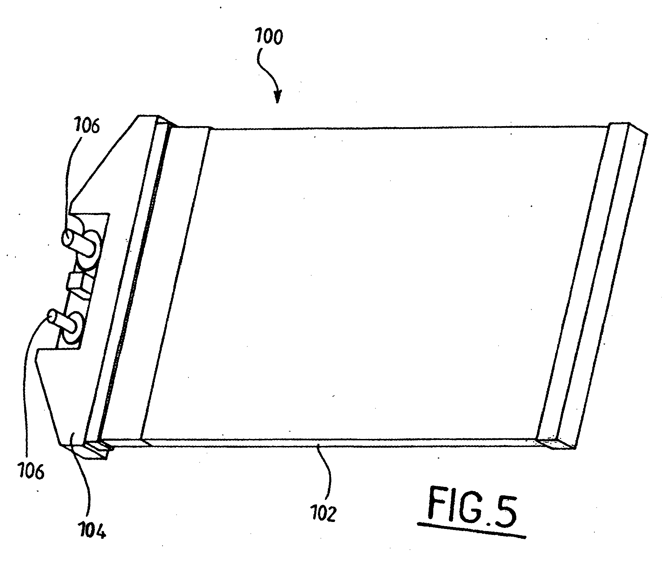

A la figure 5, les cosses 106 sont disposées au centre du boîtier électronique de puissance et de commande 104 et de manière symétrique afin d'obtenir une résistance à coefficient de température positif 100 qui peut être montée par l'un ou l'autre des côtés latéraux de l'appareil de ventilation, de chauffage et/ou de climatisation 110.

Ainsi, cette disposition particulière du boîtier électronique de puissance et de commande par rapport au faisceau donne la possibilité :
- d'augmenter la section de passage de conduite d'air chaud en aval du radiateur de l'appareil de ventilation, de chauffage et/ou de climatisation,
- d'intégrer d'autres canaux latéraux internes dédiés à conduire de l'air chaud pour mettre au point les performances aérothermiques,
- de pouvoir positionner latéralement des conduits externes de diffusion d'air,
- de pouvoir implanter latéralement des bouches de diffusion d'air,
- de libérer un espace propice à implanter un système de liaison, une cinématique ou un organe de commande appartenant à l'appareil de ventilation, de chauffage et/ou de climatisation,
- d'améliorer ou de conserver la symétrie gauche-droite des conduits d'air ou des composants dans l'appareil de ventilation, de chauffage et/ou de climatisation,
- de réduire le volume pour la connexion électrique de la résistance sur le véhicule.

Il doit être bien entendu toutefois que la description détaillée, donnée uniquement à titre d'illustration de l'objet de l'Invention, ne constitue en aucune manière une limitation, les équivalents techniques étant également compris dans le champ de la présente invention.

Ainsi, les cosses peuvent être placée en retrait de la surface du boîtier électronique de puissance et de commande, dans un lamage, de sorte qu'elles ne font pas saillie dudit boîtier.

Les cosses peuvent être placées de part et d'autre du boîtier électronique de puissance et de commande.

Par ailleurs, le boîtier peut être légèrement déporté et relié au faisceau par une connectique adaptée.

## Revendications

1. Elément de chauffage pour appareil de ventilation, de chauffage et/ou de climatisation d'habitacle (110), notamment de véhicule automobile, comprenant un faisceau plan (P1) de résistances électriques (102) couplé à un boîtier électronique de puissance et/ou de commande (104) muni de cosses de connexion électrique (106) et intégrant une carte électronique, la carte électronique et le boîtier s'étendant dans un même plan (P2), le plan (P1) du faisceau de résistances et le plan (P2) de la carte électronique étant sensiblement parallèles
**caractérisé en ce que** les cosses (106) sont disposées perpendiculairement au plan (P1) contenant le faisceau (102) et sont centrées et disposées de manière symétrique sur le boîtier électronique de puissance et de commande (104).

2. Elément de chauffage selon la revendication 1, dans lequel le boîtier électronique de puissance et/ou de commande (104) présente une épaisseur (E) sensiblement égale ou supérieure à l'épaisseur (e) du faisceau.

3. Elément de chauffage selon la revendication 1 ou 2, dans lequel les cosses (106) font saillie du boîtier électronique de puissance et de commande (104).

4. Appareil (110) de ventilation, de chauffage et/ou de climatisation pour habitacle de véhicule automobile muni d'un élément de chauffage (100) selon l'une quelconque des revendications précédentes.

## Patentansprüche

1. Heizelement für Lüftungs-, Heiz- und/oder Klimagerät des Fahrzeuginnenraums (110), insbesondere eines Kraftfahrzeugs, das eine flache Gruppe (P1) elektrischer Widerstände (102) umfasst, die an ein elektronisches Leistungsgehäuse und/oder Steuergehäuse (104) gekoppelt ist, das mit Kabelschuhen für den elektrischen Anschluss (106) ausgerüstet ist und in das eine elektronische Karte eingebaut ist, wobei die elektronische Karte und das Gehäuse in einer gleichen Ebene (P2) liegen, wobei die Ebene (P1) der Widerstandsgruppe und die Ebene (P2) der elektronischen Karte deutlich parallel zueinander liegen, **dadurch gekennzeichnet, dass** die Kabelschuhe (106) senkrecht zu der Ebene (P1) angeordnet sind, welche die Gruppe (102) umfasst, und zentriert und symmetrisch auf dem elektronischen Leistungs- und Steuergehäuse (104) angeordnet sind.

2. Heizelement gemäß Anspruch 1, bei dem das elektronische Leistungsgehäuse und/oder Steuergehäuse (104) eine Dicke (E) aufweist, die deutlich der Dicke (e) der Gruppe entspricht oder größer als sie ist.

3. Heizelement gemäß Anspruch 1 oder 2, bei dem die Kabelschuhe (106) über das elektronische Leistungsgehäuse und das Steuergehäuse (104) hinausragen.

4. Lüftungs-, Heiz- und/oder Klimagerät (110) für den Fahrzeuginnenraum eines Kraftfahrzeugs, das mit einem Heizelement (100) gemäß einem der vorherigen Ansprüche ausgerüstet ist.

## Claims

1. Heating element for a vehicle cabin ventilating, heating and air conditioning apparatus (110), in particular for a motor vehicle, including a planar (P1) electric resistance core (102) coupled to an electronic power and/or control box (104) equipped with electrical connection terminals (106) and integrating an electronic board, the electronic board and the box extending in a same plane (P2), the plane (P1) of the resistance core and the plane (P2) of the electronic board being substantially parallel,
**characterised in that** the terminals (106) are arranged perpendicularly to the plane (P1) containing the core (102), are centred and arranged symmetrically on the electronic power and control box (104).

2. Heating element according to claim 1, in which the electronic power and/or control box (104) has a thickness (E) substantially equal to or greater than the thickness (e) of the core.

3. Heating element according to claim 1 or 2, in which the terminals (106) project from the electronic power and control box (104).

4. Ventilating, heating and/or air conditioning apparatus (110) for a motor vehicle cabin, equipped with a heating element (100) according to any one of the previous claims.
